(19) Europäisches Patentamt / European Patent Office / Office européen des brevets

(11) **EP 4 155 539 B1**

(12) **EUROPEAN PATENT SPECIFICATION**

(45) Date of publication and mention
of the grant of the patent:
**24.09.2025 Bulletin 2025/39**

(21) Application number: **21199471.0**

(22) Date of filing: **28.09.2021**

(51) International Patent Classification (IPC):
**F03D 17/00** *(2016.01)* **F03D 80/50** *(2016.01)*

(52) Cooperative Patent Classification (CPC):
**F03D 17/006; F03D 17/012; F03D 17/026;
F03D 17/0285; F03D 80/502;** F05B 2260/84;
F05B 2270/8041; Y02E 10/72

(54) **SYSTEM AND METHOD FOR ESTIMATING ENERGY PRODUCTION FROM A WIND TURBINE**

SYSTEM UND VERFAHREN ZUR SCHÄTZUNG DER ENERGIEERZEUGUNG EINER
WINDTURBINE

SYSTÈME ET PROCÉDÉ D'ESTIMATION DE PRODUCTION D'ÉNERGIE À PARTIR D'UNE
ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(43) Date of publication of application:
**29.03.2023 Bulletin 2023/13**

(73) Proprietor: **LM Wind Power A/S
6000 Kolding (DK)**

(72) Inventors:
• **BULACIO, Horacio
6000 Kolding (DK)**
• **R, Ramakrishnan
562111 Bengaluru (IN)**

(74) Representative: **COPA Copenhagen Patents
Rosenvængets Allé 25
2100 Copenhagen Ø (DK)**

(56) References cited:
WO-A1-2020/156629 ES-T3- 2 595 049
US-A1- 2019 113 022

• MORIARTY P. J ET AL: "AeroDyn Theory
Manual", 1 January 2005 (2005-01-01), United
States, XP055895987, Retrieved from the Internet
<URL:https://www.nrel.gov/docs/fy05osti/36881.
pdf> [retrieved on 20220228], DOI: 10.2172/
15014831

## Description

### TECHNICAL FIELD

The present disclosure relates to the field of wind turbine management. Particularly, but not exclusively, the present disclosure relates to a system and method for estimating energy production from a wind turbine.

### BACKGROUND

In the recent times, generation of energy using renewable sources is increasing. Wind turbines are used to generate energy as wind energy is a renewable source. The wind turbines are generally installed in wind farms and are exposed to the environment almost all the time. The wind turbines comprising a plurality of blades are subjected to damage because of forceful wind, lighting strikes, temperature differences, rain, hail, contamination, bird and insect attacks and the like. Further, the wind turbines which are subjected to damage reduces the energy productions, that leads to financial losses. Therefore, the wind turbines need to serviced regularly. The existing techniques, employ manual inspection for determining the need to service the wind turbine, determining damages in the wind turbine and the like. Generally a turbine maintenance operator has to visit the wind turbine and inspect the blades. Manual inspection is cost in-effective due to the location where the wind turbine is installed such as in sea, in hilly region and the like. Further, for performing the manual inspection, the operation of the wind turbine is halted, the blades of the wind turbine are removed and inspected. Also, manual inspection is not safe for the maintenance team as the blades are located at a great height and the maintenance operator has to climb to the blades to inspect the damages.

In view of the above disadvantages in the manual inspection process, there is a need for a method to determine the energy production of the wind turbine. When the energy production of the wind turbine is reduced, there is a need to determine the damage in the blades of the wind turbine that can be used to perform the maintenance activities. Also, there is a need to determines energy production losses which can be used to operate the wind turbine accordingly.

The information disclosed in this background of the disclosure section is only for enhancement of understanding of the general background of the invention and should not be taken as an acknowledgment or any form of suggestion that this information forms the prior art already known to a person skilled in the art.

WO2020/156629A1 is a relevant example of prior art.

### SUMMARY

Embodiments and aspects of the disclosure are described in detail herein and are considered a part of the claimed disclosure.

Disclosed herein is a method of estimating energy production from a wind turbine, wherein the wind turbine comprises a plurality of blades in use. The method comprises obtaining one or more infrared images of each blade from the plurality of blades of the wind turbine. Further, the method comprises identifying, one or more cross-sectional regions of each of the blade using the one or more infrared images (103) based on a boundary region, wherein the boundary region is indicative of a transition from a first region with laminar air flow to a second region with a turbulent air flow. Furthermore, determining a plurality of polar values indicative of an aerodynamic profile for each of the one or more cross-sectional regions based on one or more panel method based techniques and the boundary region. Finally, estimating the energy production for the wind turbine based on one or more blade-element momentum (BEM) based techniques using the plurality of polar values.

Further, the present disclosure discloses a computing system for estimating energy production from a wind turbine, wherein the wind turbine comprises a plurality of blades in use. The computing system comprises at least one processor, and a memory communicatively coupled to the at least one processor. The memory stores instructions for the at least one processor, which one execution causes the at least one processor to obtain one or more infrared images of each blade from the plurality of blades of the wind turbine. Further, the instructions cause the at least one processor to identify one or more cross-sectional regions of each of the blade using the one or more infrared images (103) based on a boundary region, wherein the boundary region is indicative of a transition from a first region with laminar air flow to a second region with a turbulent air flow. Furthermore, the instructions cause the at least one processor to determine a plurality of polar values indicative of an aerodynamic profile for each of the one or more cross-sectional regions based on one or more panel method based techniques and the boundary region. Finally, the instructions cause the at least one processor to estimate the energy production for the wind turbine based on one or more blade-element momentum (BEM) based techniques using the plurality of polar values.

The foregoing summary is illustrative only and is not intended to be in any way limiting. In addition to the illustrative aspects, embodiments, and features described above, further aspects, embodiments, and features may become apparent by reference to the drawings and the following detailed description.

## BRIEF DESCRIPTION OF THE ACCOMPANYING DRAWINGS

The novel features and characteristics of the disclosure are set forth in the appended claims. The disclosure itself, however, as well as a preferred mode of use, further objectives and advantages thereof, may best be understood by reference to the following detailed description of an illustrative embodiment when read in conjunction with the accompanying drawings. The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. One or more embodiments are now described, by way of example only, with reference to the accompanying figures wherein like reference numerals represent like elements and in which:

**FIGURE 1** shows an exemplary environment for estimating energy production of a wind turbine, in accordance with some embodiments of the present disclosure;
**FIGURE 2** shows a flowchart illustrating method for estimating energy production of a wind turbine, in accordance with some embodiment of the present disclosure;
**FIGURE 3A** shows an exemplary illustration of infrared images, in accordance with some embodiments of the present disclosure;
**FIGURE 3B** shows an exemplary illustration of boundary region determined in a blade of the wind turbine, in accordance with some embodiments of the present disclosure;
**FIGURE 3C** shows an exemplary illustration of one or more cross-sectional regions determined based on the boundary region, in accordance with some embodiments of the present disclosure;
**FIGURE 3D** shows an exemplary illustration of graph plots of polar values, in accordance with some embodiments of the present disclosure;
**FIGURE 3E** shows an exemplary illustration of type of damage and a damage area in the blade of the wind turbine, in accordance with some embodiments of the present disclosure; and
**FIGURE 4** shows a general-purpose computer system to estimate energy production of a wind turbine, in accordance with embodiments of the present disclosure.

It should be appreciated by those skilled in the art that any block diagrams herein represent conceptual views of illustrative systems embodying the principles of the present subject matter. Similarly, it may be appreciated that any flow charts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.
While the disclosure is susceptible to various modifications and alternative forms, specific embodiment thereof has been shown by way of example in the drawings and may be described in detail below. It should be understood, however that it is not intended to limit the disclosure to the particular forms disclosed, but on the contrary, the disclosure is to cover all modifications and alternative falling within the scope of the disclosure.
The terms "comprises", "includes" "comprising", "including" or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" or "includes...a" does not, without more constraints, preclude the existence of other elements or additional elements in the system or apparatus.
In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

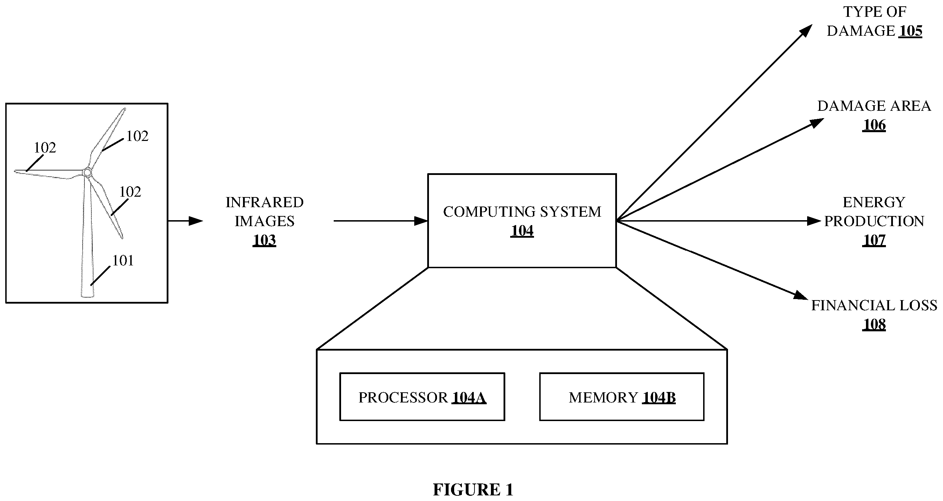

**FIGURE 1** shows an exemplary environment for estimating energy production from a wind turbine, in accordance with some embodiments of the present disclosure.
In an embodiment, a wind turbine (101) comprises a plurality of blades (102) in use. The plurality of blades (102) in use are subjected to damage because of exposed environmental conditions, insect attack, bird attack and the like. The damage to each of the blade (102) from the plurality of blades (102) of the wind turbine (101) leads to a reduction in energy production (107) of the wind turbine (101) as the performance of the blades (102) is reduced. Further, the energy production (107) from the wind turbine (101) is estimated to determine a type of a maintenance activity required to be performed for each of the blade (102) in the wind turbine (101).

In one embodiment, for estimating the energy production (107) of the wind turbine (101), a computing system (104) comprising at least one processor (104A), and a memory (104B) is used. The computing system (104) may be housed in a server, a laptop, a desktop computer, and the like. Further, the computing system (104) obtains one or more infrared images (103) of each blade (102) from the plurality of blades (102) of the wind turbine (101). In one embodiment, the one or more infrared images (103) may be obtained in real-time from an image capturing device. In another embodiment, the one or more infrared images (103) may be stored in the memory (104B) and obtained by the computing system (104). The one or more infrared images (103) of the plurality of blades (102) may be captured using a thermographic camera (i.e., a thermal imaging camera).

In an embodiment, the computing system (104) identifies one or more cross-sectional regions of each of the blade (102) using the one or more infrared images (103) based on a boundary region. The boundary region is indicative of a transition from a first region with laminar air flow to a second region with a turbulent air flow. The first region with laminar air flow comprises a smooth flow of air in the form of parallel layers. The second region with turbulent air flow comprises an air flow with swirls in a random motion. Further, in the one or more infrared images (103), the first region, the second region and the boundary region are identified based on a temperature variation. For example, consider the one or more infrared images (103) represented using a grayscale colormap with values in the range [0 to 255], then the first region includes values closer to 255 represented by white color due to high heat transfer, the second region includes values closer to 0 represented by black color due to low heat transfer or vice versa. Further, the boundary region denotes a sudden transition from the first region to the second region or vice vera. For example, consider an infrared image represented as a matrix 'A' as shown below:

$$A = \begin{bmatrix} 207 & 212 & 209 \\ 201 & 198 & 205 \\ 150 & 153 & 148 \\ 98 & 105 & 103 \\ 20 & 25 & 21 \\ 17 & 19 & 11 \end{bmatrix}$$

the rows 1 and 2 of the matrix 'A' may denote the first region, the rows 3 and 4 of the matrix 'A' may denote the boundary region, and the rows 5 and 6 of the matrix 'A' may denote the second region. The above example is only for illustration and in one embodiment, the pixel values may be interchanged for the first region and the second region.

In an embodiment, after determining the boundary region in each of the blade (102), the computing system (104) identifies one or more cross sectional regions based on the boundary region. The one or more cross sectional regions denote a portion of the blade (102) obtained by slicing (or dividing) the blade (102) along the horizontal axis of the blade (102). Further, the one or more cross sectional regions is identified based on a position of the boundary region identified in the one or more infrared images (103). For example, consider the infrared image represented as the matrix 'A' as shown below:

$$A = \begin{bmatrix} 207 & 212 & 209 & . & 195 & 188 \\ 201 & 198 & 205 & . & 146 & 141 \\ 150 & 153 & 148 & . & 131 & 126 \\ 098 & 105 & 103 & . & 106 & 105 \\ 020 & 025 & 021 & . & 088 & 081 \\ 017 & 019 & 011 & . & 043 & 049 \end{bmatrix}$$

The rows 3 and 4 of the matrix 'A' may denote the boundary region corresponding to the columns 1 to 3 , and the rows 2 and 3 of the matrix 'A' may denote the boundary region corresponding to the columns 4 and 5. The one or more cross sectional regions (i.e., two cross sectional regions) are identified in the matrix 'A', where the two cross sectional regions are separated by a 'dotted line'. The one or more cross sectional regions are identified based on a transition or a change in the position of the boundary regions in the one or more infrared images (103). For example, in the matrix 'A' the boundary region changes from the rows 3 and 4 to rows 2 and 3 between the columns 3 and 4, therefore, the two cross sectional regions are identified between the columns 3 and 4.

In an embodiment, computing system (104) determines a plurality of polar values indicative of an aerodynamic profile for each of the one or more cross-sectional regions based on one or more panel method based techniques and the boundary region. For example, the plurality of polar values may be a drag co-efficient, a lift co-efficient, an angle of attack, a lift force, a combination thereof. Further, the one or more panel method based techniques may include at least one of computation fluid dynamics (CDF), wind tunnel measurements, and the like.

In an embodiment, the computing system (104) estimates the energy production (107) for the wind turbine (101) based on one or more blade (102)-element momentum (BEM) based techniques using the plurality of polar values. For example, the estimated energy production (107) may denote a total energy produced using the wind turbine (101) annually, bi-annually, quarterly and the like. Further, a deviation between the estimated energy production (107) of the wind turbine (101) and a pre-defined threshold value is determined. The pre-defined threshold value may indicate the energy produced by the wind turbine (101) without a damage in the plurality of the blades (102). The deviation indicates a reduction in an amount of energy generated by the wind turbine (101). The reduction in the energy production may be due to the damages in the plurality of the blades (102). Further, the computing system (104) determines a financial loss (108) due to reduction in the generation of the energy by the wind turbine (101) due to the damages in the plurality of the blades (102).

In an embodiment, the computing system (104) determines a type of the damage (105) (105) to the plurality of the blades (102) of the wind turbine (101), and a damage area (106) (i.e., a portion of the blade (102) prone to damage) of the blade (102). A user may identify at least one of, a type of a maintenance activity and a time duration for performing the maintenance activity for the damage area (106) of the blade (102) in the wind turbine (101) based on the financial loss (108) and the deviation. Further, the user may also determine how long to operate the wind turbine based on the deviation of the energy from the pre-defined threshold value. For example, the type of a maintenance activity my include at least one of a preventive maintenance, a corrective maintenance and the like. The time duration indicates a time range for completing the maintenance activity.

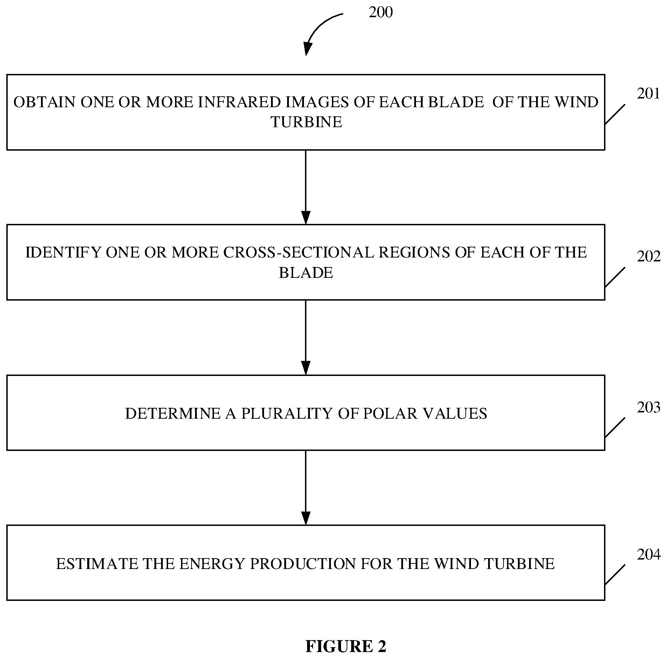

**FIGURE 2** shows a flowchart illustrating method of estimating energy production (107) from a wind turbine (101), in accordance with some embodiment of the present disclosure.

The order in which the method (300) may be described is not intended to be construed as a limitation, and any number of the described method blocks may be combined in any order to implement the method. Additionally, individual blocks may be deleted from the methods without departing from the spirit and scope of the subject matter described herein. Furthermore, the method may be implemented in any suitable hardware, software, firmware, or combination thereof.

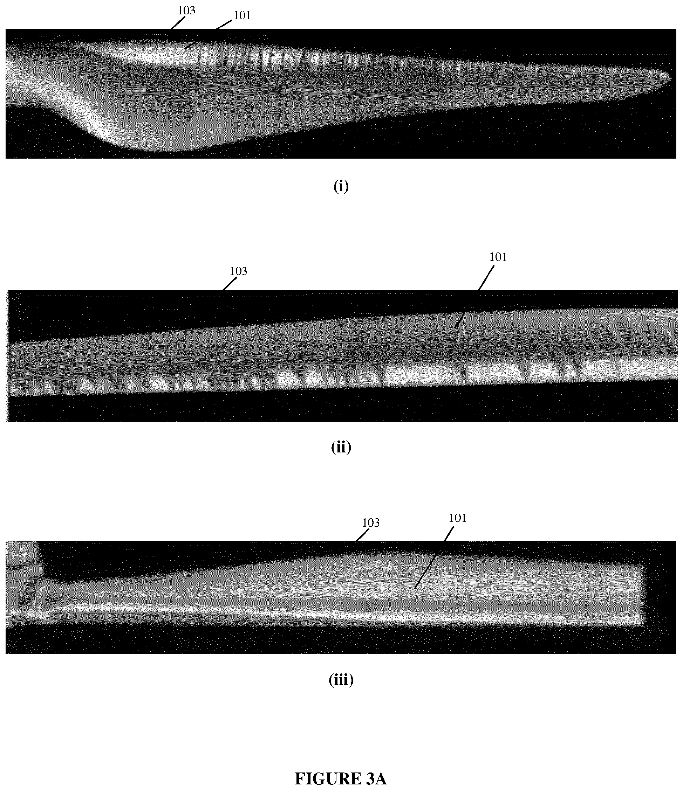

At the step (301), the computing system (104) obtains the one or more infrared images (103) of each of the blade (102) from the plurality of blades (102) of the wind turbine (101) as shown in **FIGURE 3A**.

In an embodiment, the one or more infrared images (103) of the blade (102) is captured using the thermographic camera (i.e., the thermal imaging camera). In one embodiment, the computing system (104) may obtain the one or more infrared images (103) in real-time for estimating the energy production (107) of the wind turbine (101) from the thermographic camera. The thermographic camera may be a standalone camera, housed on a drone, housed in a mobile device, and the like. In another embodiment, the computing system (104) may obtain the one or more infrared images (103) stored in the memory (104B) associated with the computing system (104). The one or more infrared images (103) capture the variation in the temperature along the blade (102) of the wind turbine (101). When the one or more infrared images (103) are represented using the grayscale colormap as shown in **FIGURE 3A (i) and (ii),** the region of the wind turbine (101) with higher temperature is represented by light colors (such as shades of white color), and the region of the wind turbine (101) with lower temperature is represented by dark colors (such as shades of black color). The one or more infrared images (103) are denoted by a matrix comprising pixel values in the range of 0 to 255, when the grayscale color map is used. When the one or more infrared images (103) are represented using the colormap as shown in **FIGURE 3A (iii)**, the region of the wind turbine (101) with higher temperature is represented by a range of colors such as shades of red, shades of orange, shades of yellow, and the like, and the region of the wind turbine (101) with lower temperature is represented by a range of colors such as shades of green, shades of blue, and the like. The one or more infrared images (103) are denoted by a set of 3 matrices comprising the pixel values in the range of 0 to 255, when the colormap is used. The set of 3 matrices denote an RGB values, CMYK values, HIS values, Ycbcr values and the like based on a color space used to represent the one or more infrared images (103).

Referring back to **FIGURE 2,** at the step (302), the computing system (104) identifies the one or more cross-sectional regions of each of the blade (102) using the one or more infrared images (103) based on the boundary region. The boundary region is indicative of the transition from the first region with the laminar air flow to the second region with the turbulent air flow.

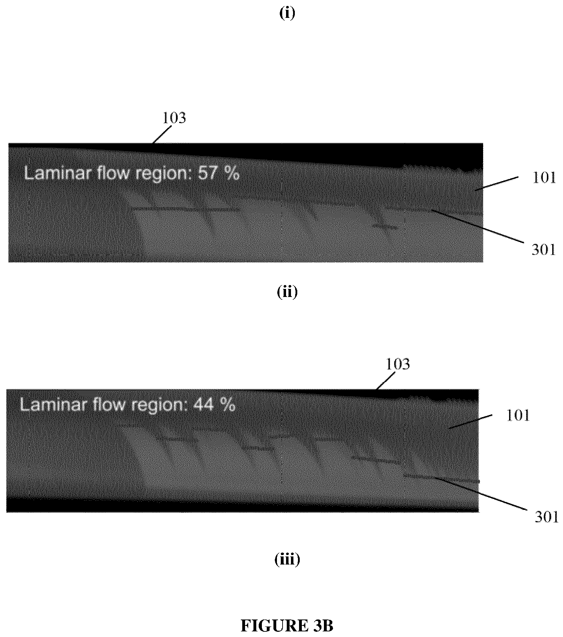

In an embodiment, the computing system (104) determines the boundary region of the blade (102) in the one or more infrared images (103) using one or more image processing techniques. For example, the one or more image processing techniques may include at least one of pre-processing, normalization, object detection, segmentation, statistical averages, and the like. The one or more image processing techniques determines the boundary region (301) based on the variation in the temperature between the first region and the second region as shown in **FIGURE 3B**. The variation in the temperature is between the first region and the second region is determined based on the pixel values of the one or more infrared images (103). In one embodiment, the heat transfer resistance is lower in the second region and higher in the first region. For example, if the surrounding air is colder than the rotor blade (102) surface, a thermal pattern in the one or more infrared images (103) as shown in **FIGURE 3B** is obtained, because the temperature in the second region is colder than the first region. Hence, the boundary region (301) indicating the transition from the first region to the second region is determined in real-time using the one or more image processing techniques as shown in **FIGURE 3B**.

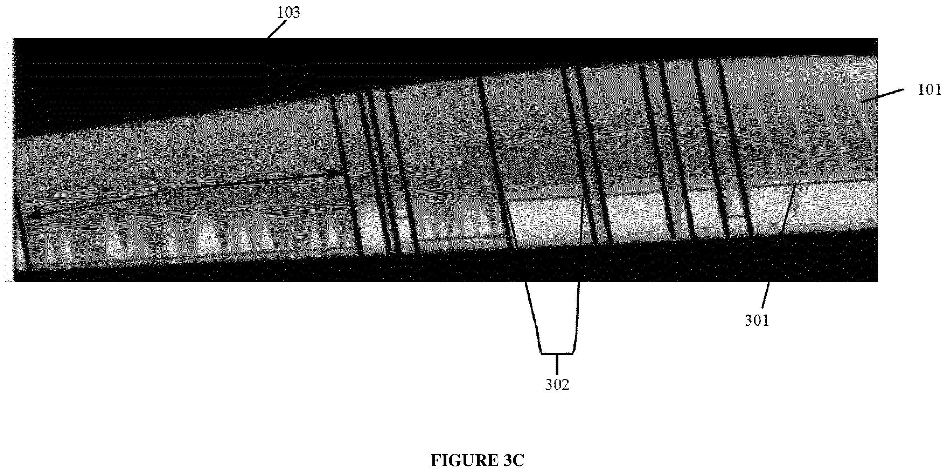

In an embodiment, the computing system (104) segregates the blade (102) in the one or more infrared images (103) into the one or more cross-sectional regions (302) based on the boundary region (301) and the pixel values associated with the one or more infrared images (103) as shown in **FIGURE 3C.** The computing system (104) segregates the blade (102) in the one or more infrared images (103) by slicing (or dividing) the blade (102) along the horizontal axis of the blade (102). The one or more cross sectional regions are denoted the each slice comprising a portion of the blade (102) in the one or more infrared images (103). In one embodiment, the computing system (104) may determine the one or more cross-sectional regions (302) based on a transition in the position of the boundary region (301) along the blade (102) of the wind turbine (101).

Referring back to **FIGURE 2,** at the step (203), the computing system (104) determines the plurality of polar values indicative of the aerodynamic profile for each of the one or more cross-sectional regions (302) based on the one or more panel method based techniques and the boundary region (301).

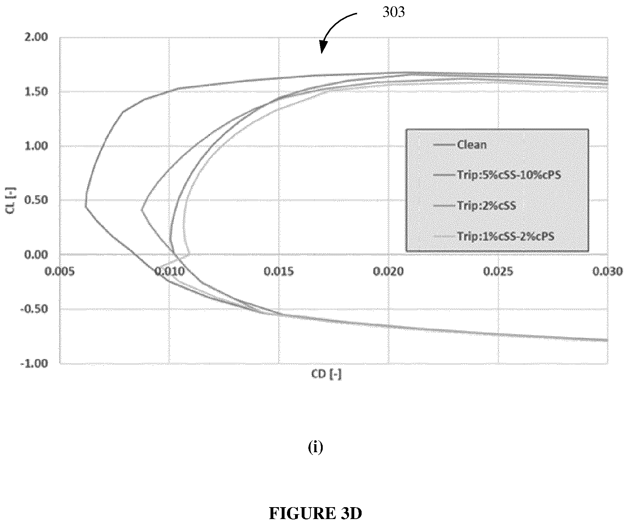

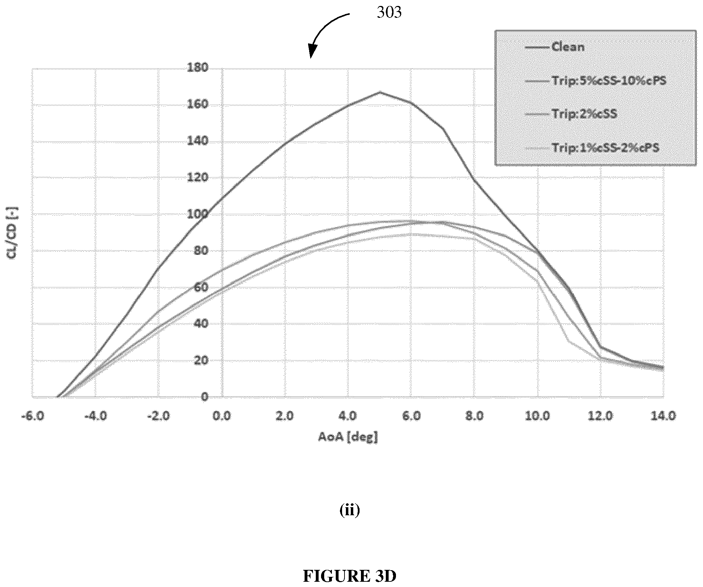

In an embodiment, the computing system (104) provides each of the one or more cross-sectional regions (302), the boundary region (301), and one or more sectional co-ordinates as an input to the one or more panel method based techniques. The one or more panel method based techniques may include at least one of computation fluid dynamics (CDF),wind tunnel measurements and the like. Further, the computing system (104) determines the plurality of polar values for each of the one or more cross-sectional regions (302) based on an output of the one or more panel method based techniques. For example, the plurality of polar values may be a drag co-efficient, a lift co-efficient, an angle of attack, a lift force, a combination thereof and the like. The polar values are denoted as graphs (106) as shown in **FIGURE 3D (i) and (ii)**. The curves in the yellow, red and grey colors denote the polar values of the plurality of the blades (102) of the wind turbine (101) in use that are prone to damages and the curve in the blue color denotes the polar values of the blade (102) of the wind turbine (101) without damages.

Referring back to **FIGURE 2,** at the step (204), the computing system (104) estimates the energy production (107) for the wind turbine (101) based on the one or more blade (102)-element momentum (BEM) based techniques using the plurality of polar values.

In an embodiment, the computing system (104) provides the plurality of polar values associated with each of the one or more cross-sectional regions (302), a blade (102) geometry data, a wind turbine (101) operational data as an input to the one or more BEM based techniques. Further, the computing system (104) estimates the energy production (107) for the wind turbine (101) based on an output of the one or more BEM based techniques.

In an embodiment, the computing system (104) determines the deviation between the energy production (107) estimated for the wind turbine (101) and the pre-defined threshold value. For example, the estimated energy production (107) may denote a total energy produced using the wind turbine (101) annually, bi-annually and the like. For example, the deviation (D) in the energy production (107) is determined as a difference between the pre-defined threshold value $(AEP_{Clean)}$ and the estimated energy production (107) $(AEP_{estimated})$using the below equation:

$$D = AEP_{Clean} - AEP_{estimated} \cdots\cdots\cdots\cdots\cdots\cdots\cdots\cdots\cdots\cdots\cdots (1)$$

If the $AEP_{Clean}$ = 16,800 Mega Watt hour per year (MWh/y), and the $AEP_{estimated}$ = 15,400 MWh/y, then the deviation in the energy production (107) is D = 1,400 MWh/y.

Further, the computing system (104) computes a reduction in the energy production (107) of the wind turbine (101) based on the deviation. The reduction in the energy production (107) is denoted in terms of percentage such as 7%, 12%, and the like. The reduction (R) in the energy production (107) is computed using the below equation:

$$R = \left[1 - \left(\frac{AEP_{estimated}}{AEP_{Clean}}\right)\right] * 100 \cdots\cdots\cdots\cdots\cdots\cdots\cdots\cdots\cdots\cdots (2)$$

If the $AEP_{Clean}$ = 16,800 Mega Watt hour per year (MWh/y), and the $AEP_{estimated}$= 15,400 MWh/y, then the reduction (R) in the energy production (107) is R = 8.3%.

In an embodiment, the computing system (104) determines the financial loss (108) from the wind turbine (101) due to the reduction in the energy production (107). The financial loss (108) per year is determined using the below equation:

$$Financial\ Loss\ (108) = D * Cost\ of\ 1KWh\ energy \dots\dots\dots\dots\dots\dots\dots (3)$$

If the deviation (D) in the energy production (107) is D = 1,400 MWh/y and the cost of 1KWh of energy is 30 Euros, then the financial loss (108) is 42,000 Euros per year.

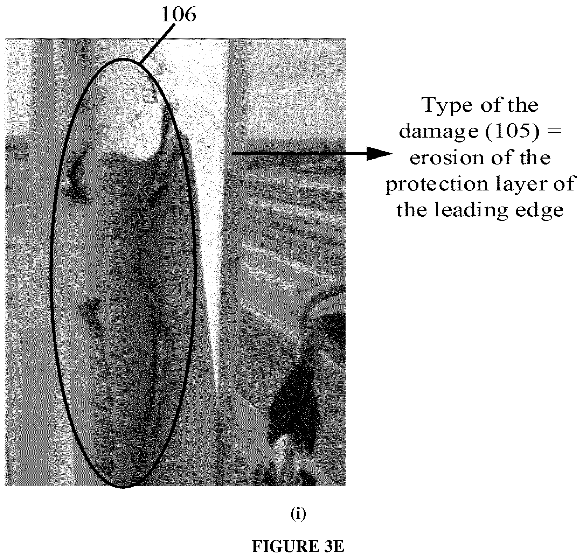

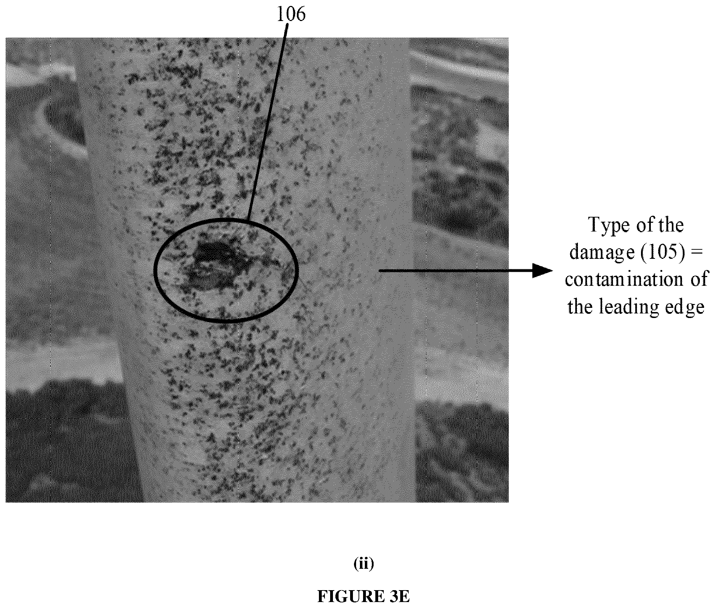

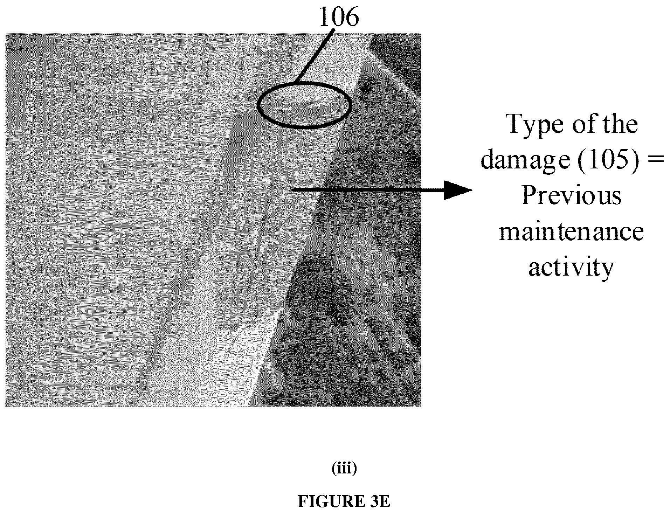

In an embodiment, the computing system (104) determines at least one of a damage area (106) of the blade (102), and a type of the damage (105) on the blade (102) using an Artificial Intelligence (AI) model. The damage area (106) of the blade (102) indicates a portion of the blade (102) subjected to damage. The AI model denotes the damage area (106) in the one or more infrared images (103). The type of the damage (105) for example, comprises at least one of an erosion of a leading edge of the blade (102), erosion of a leading edge protection of the blade (102), contamination in the leading edge, deformations in the aerodynamic profile, deformations in the leading edge, absence of a vortex generator and wrong blade (102) operational setting. The AI model may be stored in the computing system (104). In another embodiment, the AI model may be stored on a remote server. The AI model comprises at least one of a deep neural network based model such as Convolutional neural networks, recurrent neural networks and the like, a shallow neural network such as Multi-layer perceptron and the like. Further, the AI model is pretrained to determine at least one of the damage area (106) of the blade (102), and the type of the damage (105) using the one or more infrared images (103), the boundary region (301), and the one or more cross-sectional regions (302). For example, the type of the damage (105) and the damage area (106) determined by the AI model is as shown in **FIGURE 3E (i), (ii) and (iii)**.

In an embodiment, determining one or more factors of the blade (102) in the wind turbine (101) affected by the damage, wherein the one or more factors comprises a load distribution associated with each of the blade (102) in the wind turbine (101), asymmetric load distributions between each of the blade (102) in the wind turbine (101), a noise emission value associated with the wind turbine (101), and a need for a control change in the wind turbine (101).

In an embodiment, the user may identify at least one of a type of a maintenance activity and a time duration for performing the maintenance activity for the damage area (106) of the blade (102) in the wind turbine (101) based on the financial loss (108) and the one or more factors. The time duration for performing the maintenance activity indicates a time range for performing the maintenance activity such that the damage area (106) does not increase. For example, if the blade (102) of the wind turbine (101) has small regions of rust, then the time duration for painting the blade (102) of the wind turbine (101) may be 2 months. In another example, if the blade (102) of the wind turbine (101) is errored up to 40% and the load distribution of the blade (102) has increases on a lower portion of the blade (102), then the time duration for repairing the blade (102) may be 3 weeks. The type of the maintenance activity may include at least one of preventive maintenance (such as painting to prevent rust), corrective maintenance (replacing a portion of the blade (102)), and the like.

The method of estimating energy production (107) from the wind turbine (101), computes the energy production (107) from the wind turbine (101), the reduction in the energy production (107) of the wind turbine (101) due to damages, the type of the damage (105) in the wind turbine (101), the damage area (106) of the wind turbine (101), and the financial losses because of the reduction in the energy production (107). Further, the financial loss (108) helps the user to determine the type of the maintenance activity based on a cost required to perform the maintenance activity. The type of the damage (105) and the damage area (106) helps the user determine the type of the maintenance activity that is required and also determine the time duration for performing the maintenance activity. The AI model used to determine the damage area (106) and the type of the damage (105) reduces the cost involved in manual inspection of the wind turbine (101). The AI model eliminates the need to stop the operation of the wind turbine (101) that is required for manual inspection.

COMPUTER SYSTEM

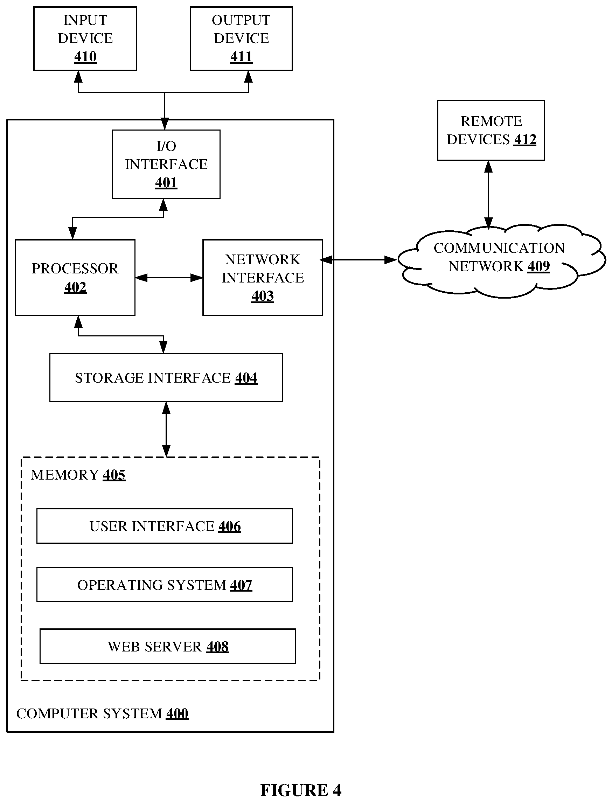

**FIGURE 4** illustrates a block diagram of an exemplary computer system (400) for implementing embodiments consistent with the present disclosure. In an embodiment, the computer system (400) may be used to implement the method of estimating energy production (107) from the wind turbine (101). The computer system (400) may comprise a central processing unit ("CPU" or "processor") (402). The processor (402) may comprise at least one data processor for executing program components for dynamic resource allocation at run time. The processor (402) may include specialized processing units such as integrated system (bus) controllers, memory (402) management control units, floating point units, graphics processing units, digital signal processing units, etc.

The processor (402) may be disposed in communication with one or more input/output (I/O) devices (not shown) via I/O interface (401). The I/O interface (401) may employ communication protocols/methods such as, without limitation, audio, analog, digital, monoaural, RCA, stereo, IEEE-(1394), serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface (401), the computer system (400) may communicate with one or more I/O devices. For example, the input device (410) may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device (411) may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system (400) is connected to the service operator through a communication network (409). The processor (402) may be disposed in communication with the communication network (409) via a network interface (403). The network interface (403) may communicate with the communication network (409). The network interface (403) may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network (409) may include, without limitation, a direct interconnection, e-commerce network, a peer to peer (P2P) network, local area (106) network (LAN), wide area (106) network (WAN), wireless network (e.g., using Wireless Application Protocol), the Internet, Wi-Fi, etc. Using the network interface (403) and the communication network (409), the computer system (400) may communicate with the one or more service operators.

In some embodiments, the processor (402) may be disposed in communication with a memory (405) (e.g., RAM, ROM, etc. not shown in Figure 7 via a storage interface (404). The storage interface (404) may connect to memory (405) including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory (405) may store a collection of program or database components, including, without limitation, user interface (406), an operating system (407), web server (408) etc. In some embodiments, computer system (400) may store user/application data (406), such as the data, variables, records, etc. as described in this disclosure. Such databases may be implemented as fault-tolerant, relational, scalable, secure databases such as Oracle or Sybase.

The operating system (407) may facilitate resource management and operation of the computer system (400). Examples of operating systems include, without limitation, APPLE® MACINTOSH® OS X®, UNIX®, UNIX-like system distributions (E.G., BERKELEY SOFTWARE DISTRIBUTION® (BSD), FREEBSD®, NETBSD®, OPENBSD, etc.), LINUX® DISTRIBUTIONS (E.G., RED HAT®, UBUNTU®, KUBUNTU®, etc.), IBM®OS/2®, MICROSOFT® WINDOWS® (XP®, VISTA®/7/8, 10 etc.), APPLE® IOS®, GOOGLE™ ANDROID™, BLACKBERRY® OS, or the like.

In some embodiments, the computer system (400) may implement a web browser (not shown in Figure) stored program component. The web browser may be a hypertext viewing application, such as MICROSOFT® INTERNET EXPLORER®, GOOGLE™ CHROME™, MOZILLA® FIREFOX®, APPLE® SAFARI®, etc. Secure web browsing may be provided using Secure Hypertext Transport Protocol (HTTPS), Secure Sockets Layer (SSL), Transport Layer Security (TLS), etc. Web browsers (408) may utilize facilities such as AJAX, DHTML, ADOBE® FLASH®, JAVASCRIPT®, JAVA®, Application Programming Interfaces (APIs), etc. In some embodiments, the computer system (400) may implement a mail server stored program component. The mail server may be an Internet mail server such as Microsoft Exchange, or the like. The mail server may utilize facilities such as Active Server Pages (ASP), ACTIVEX®, ANSI® C++/C#, MICROSOFT®, .NET, CGI SCRIPTS, JAVA®, JAVASCRIPT®, PERL®, PHP, PYTHON®, WEBOBJECTS®, etc. The mail server may utilize communication protocols such as Internet Message Access Protocol (IMAP), Messaging Application Programming Interface (MAPI), MICROSOFT® Exchange, Post Office Protocol (POP), Simple Mail Transfer Protocol (SMTP), or the like. In some embodiments, the computer system (400) may implement a mail client stored program component. The mail client may be a mail viewing application, such as APPLE® MAIL, MICROSOFT® ENTOURAGE®, MICROSOFT® OUTLOOK®, MOZILLA® THUNDERBIRD®, etc.

Furthermore, one or more computer-readable storage media may be utilized in implementing embodiments consistent with the present invention. A computer-readable storage medium refers to any type of physical memory (405) on which information or data readable by a processor (402) may be stored. Thus, a computer-readable storage medium may store instructions for execution by one or more processors, including instructions for causing the processors to perform steps or stages consistent with the embodiments described herein. The term "computer-readable medium" should be understood to include tangible items and exclude carrier waves and transient signals, i.e., non-transitory. Examples include Random Access memory (RAM), Read-Only memory (ROM), volatile memory, non-volatile memory, hard drives, Compact Disc (CD) ROMs, Digital Video Disc (DVDs), flash drives, disks, and any other known physical storage media.

In an embodiment, the computer system (400) may comprise remote devices (412). The remote devices (412) may indicate a remote server, a remote database, a thermographic camera and the like. The computer system (400) may receive the one or more infrared images (103), the AI model, the blade (102) geometry data, and the wind turbine (101) operational data, and the like from the remote devices (412) through the communication network (409).

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it may be readily apparent that more than one device/article (whether or not they cooperate) may be used in place of a single device/article. Similarly, where more than one device or article is described herein (whether or not they cooperate), it may be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **FIGURE 3** show certain events occurring in a certain order. In alternative embodiments, certain operations may be performed in a different order, modified, or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments may be apparent to those skilled in the art. The various aspects and embodiments disclosed herein are for purposes of illustration and are not intended to be limiting, with the true scope being indicated by the following claims.

**REFERRAL NUMERALS:**

| Reference number | Description |
| --- | --- |
| 101 | Wind turbine |
| 102 | Blade |
| 103 | Infrared images |
| 104 | Computing system |
| 104A | Processor |
| 104B | Memory |
| 105 | Type of damage |
| 106 | Damage area |
| 107 | Energy production |
| 108 | Financial loss |
| 301 | Boundary region |
| 302 | Cross sectional regions |
| 303 | Graphs |
| 400 | Computer System |
| 401 | I/O interface |
| 402 | Processor |
| 403 | Network Interface |

(continued)

| Reference number | Description |
|---|---|
| 404 | Storage Interface |
| 405 | Memory |
| 406 | user interface |
| 407 | Operating System |
| 408 | Web Server |
| 409 | Communication Network |
| 410 | Input Device |
| 411 | Output Device |
| 412 | Remote Devices |

**Claims**

1.  A method for estimating energy production (107) from a wind turbine (101), wherein the wind turbine (101) comprises a plurality of blades (102) in use, the method comprises:

    obtaining, by a computing system (104), one or more infrared images (103) of each blade (102) from the plurality of blades (102) of the wind turbine (101);
    identifying, by the computing system (104), one or more cross-sectional regions (302) of each of the blade (102) using the one or more infrared images (103) based on a boundary region (301), wherein the boundary region (301) is indicative of a transition from a first region with laminar air flow to a second region with a turbulent air flow;
    determining, by the computing system (104), a plurality of polar values indicative of an aerodynamic profile for each of the one or more cross-sectional regions (302) based on one or more panel method based techniques and the boundary region (301); and
    estimating, by the computing system (104), the energy production (107) for the wind turbine (101) based on one or more blade (102)-element momentum (BEM) based techniques using the plurality of polar values.

2.  The method as claimed in claim 1, wherein identifying one or more cross-sectional regions (302) comprises:

    determining the boundary region (301) of the blade (102) in the one or more infrared images (103) using one or more image processing techniques; and
    segregating the blade (102) in the one or more infrared images (103) into the one or more cross-sectional regions (302) based on the boundary region (301) and pixel values associated with the one or more infrared images (103).

3.  The method as claimed in claim 1, wherein determining the plurality of polar values comprises:

    providing each of the one or more cross-sectional regions (302), the boundary region (301), and one or more sectional co-ordinates as an input to the one or more panel method based techniques; and
    determining the plurality of polar values for each of the one or more cross-sectional regions (302) based on an output of the one or more panel method based techniques.

4.  The method as claimed in claim 1, wherein estimating the energy production (107) comprises:

    providing the plurality of polar values associated with each of the one or more cross-sectional regions (302), a blade (102) geometry data, a wind turbine (101) operational data as an input to the one or more BEM based techniques; and
    estimating the energy production (107) for the wind turbine (101) based on an output of the one or more BEM based techniques.

5.  The method as claimed in claim 1, further comprises:

determining a deviation between the energy production (107) estimated for the wind turbine (101) and a predefined threshold value;

computing a reduction in the energy production (107) of the wind turbine (101) based on the deviation;

determining a financial loss (108) from the wind turbine (101) due to the reduction in the energy production (107);

determining at least one of a damage area (106) of the blade (102), a type of the damage (105) on the blade (102) using an Artificial Intelligence (AI) model;

determining one or more factors of the blade (102) in the wind turbine (101) affected by the damage, wherein the one or more factors comprises a load distribution associated with each of the blade (102) in the wind turbine (101), asymmetric load distributions between each of the blade (102) in the wind turbine (101), a noise emission value associated with the wind turbine (101), and a need for a control change in the wind turbine (101); and

identifying at least one of a type of a maintenance activity and a time duration for performing the maintenance activity for the damage area (106) of the blade (102) in the wind turbine (101) based on the financial loss (108) and the one or more factors.

6. A computing system (104) for estimating energy production (107) from a wind turbine (101), wherein the wind turbine (101) comprises a plurality of blades (102) in use, the computing system (104) comprises:

at least one processor (104A); and

a memory (104B) communicatively coupled to the at least one processor (104A), wherein the memory (104B) stores instructions for the at least one processor (104A), which one execution causes the at least one processor (104A) to:

obtain one or more infrared images (103) of each blade (102) from the plurality of blades (102) of the wind turbine (101);

identify one or more cross-sectional regions (302) of each of the blade (102) using the one or more infrared images (103) based on a boundary region (301), wherein the boundary region (301) is indicative of a transition from a first region with laminar air flow to a second region with a turbulent air flow;

determine a plurality of polar values indicative of an aerodynamic profile for each of the one or more cross-sectional regions (302) based on one or more panel method based techniques and the boundary region (301); and

estimate the energy production (107) for the wind turbine (101) based on one or more blade (102)-element momentum (BEM) based techniques using the plurality of polar values.

7. The computing system (104) as claimed in claim 6, wherein the at least one processor (104A) is configured to identify the one or more cross-sectional regions (302) comprises:

determining the boundary region (301) of the blade (102) in the one or more infrared images (103) using one or more image processing techniques; and

segregating the blade (102) in the one or more infrared images (103) into the one or more cross-sectional regions (302) based on the boundary region (301) and pixel values associated with the one or more infrared images (103).

8. The computing system (104) as claimed in claim 6, wherein the at least one processor (104A) is configured to determine the plurality of polar values comprises:

providing each of the one or more cross-sectional regions (302), the boundary region (301), and one or more sectional co-ordinates as an input to the one or more panel method based techniques; and

determining the plurality of polar values for each of the one or more cross-sectional regions (302) based on an output of the one or more panel method based techniques.

9. The computing system (104) as claimed in claim 6, wherein the at least one processor (104A) is further configured to estimating the energy production (107) comprises:

providing the plurality of polar values associated with each of the one or more cross-sectional regions (302), a blade (102) geometry data, a wind turbine (101) operational data as an input to the one or more BEM based techniques; and

estimating the energy production (107) for the wind turbine (101) based on an output of the one or more BEM based techniques.

10. The computing system (104) as claimed in claim 6, wherein the at least one processor (104A) is configured to:

determine a deviation between the energy production (107) estimated for the wind turbine (101) and a pre-defined threshold value;

compute a reduction in the energy production (107) of the wind turbine (101) based on the deviation;

determine a financial loss (108) from the wind turbine (101) due to the reduction in the energy production (107);

determine at least one of a damage area (106) of the blade (102), a type of the damage (105) on the blade (102) using an Artificial Intelligence (AI) model;

determine one or more factors of the blade (102) in the wind turbine (101) affected by the damage, wherein the one or more factors comprises a load distribution associated with each of the blade (102) in the wind turbine (101), asymmetric load distributions between each of the blade (102) in the wind turbine (101), a noise emission value associated with the wind turbine (101), and a need for a control change in the wind turbine (101); and

identify at least one of a type of a maintenance activity and a time duration for performing the maintenance activity for the damage area (106) of the blade (102) in the wind turbine (101) based on the financial loss (108) and the one or more factors.

**Patentansprüche**

1. Verfahren zum Schätzen der Energieproduktion (107) einer Windenergieanlage (101), wobei die Windenergieanlage (101) im Einsatz mehrere Blätter (102) umfasst, wobei das Verfahren Folgendes umfasst:

Abrufen eines oder mehrerer Infrarotbilder (103) von jedem Blatt (102) der mehreren Blätter (102) der Windenergieanlage (101) durch ein Rechensystem (104);

mithilfe des einen oder der mehreren Infrarotbilder (103) Bestimmen einer oder mehrerer Querschnittsregionen (302) jedes der Blätter (102) durch das Rechensystem (104) auf der Grundlage einer Grenzregion (301), wobei die Grenzregion (301) einen Übergang von einer ersten Region mit laminarer Luftströmung zu einer zweiten Region mit turbulenter Luftströmung anzeigt;

Ermitteln mehrerer polarer Werte, die ein aerodynamisches Profil anzeigen, für jede der einen oder der mehreren Querschnittsregionen (302) auf der Grundlage einer oder mehrerer auf Panelverfahren basierender Techniken und der Grenzregion (301) durch das Rechensystem (104); und

Schätzen der Energieproduktion (107) der Windenergieanlage (101) auf der Grundlage einer oder mehrerer auf Blatt-(102)-Element-Impulsen (BEM) basierender Techniken unter Verwendung der mehreren polaren Werte durch das Rechensystem (104).

2. Verfahren nach Anspruch 1, wobei das Bestimmen einer oder mehrerer Querschnittsregionen (302) Folgendes umfasst:

Ermitteln der Grenzregion (301) des Blatts (102) in dem einen oder den mehreren Infrarotbildern (103) unter Verwendung einer oder mehrerer Bildverarbeitungstechniken; und

Unterteilen des Blatts (102) in dem einen oder den mehreren Infrarotbildern (103) auf der Grundlage der Grenzregion (301) und mit dem einen oder den mehreren Infrarotbildern (103) verknüpfter Pixelwerte in die eine oder die mehreren Querschnittsregionen (302).

3. Verfahren nach Anspruch 1, wobei das Ermitteln der mehreren polaren Werte Folgendes umfasst:

Bereitstellen jeder der einen oder der mehreren Querschnittsregionen (302), der Grenzregion (301) und einer oder mehrerer Schnittkoordinaten als Eingabe für die eine oder die mehreren auf Panelverfahren basierenden Techniken; und

Ermitteln der mehreren polaren Werte für jede der einen oder der mehreren Querschnittsregionen (302) auf der Grundlage einer Ausgabe der einen oder der mehreren auf Panelverfahren basierenden Techniken.

4. Verfahren nach Anspruch 1, wobei das Schätzen der Energieproduktion (107) Folgendes umfasst:

Bereitstellen der mehreren polaren Werte, die mit jeder der einen oder der mehreren Querschnittsregionen (302) verknüpft sind, von Geometriedaten eines Blatts (102), von Betriebsdaten einer Windenergieanlage (101) als Eingabe für die eine oder die mehreren auf BEM basierenden Techniken; und

Schätzen der Energieproduktion (107) der Windenergieanlage (101) auf der Grundlage einer Ausgabe der einen oder der mehreren auf BEM basierenden Techniken.

5. Verfahren nach Anspruch 1, das ferner Folgendes umfasst:

Ermitteln einer Abweichung zwischen der für die Windenergieanlage (101) geschätzten Energieproduktion (107) und einem vorgegebenen Schwellenwert;

Berechnen einer Verringerung der Energieproduktion (107) der Windenergieanlage (101) auf der Grundlage der Abweichung;

Ermitteln eines finanziellen Verlusts (108) aus der Windenergieanlage (101) aufgrund der Verringerung der Energieproduktion (107);

Ermitteln eines Schadensbereichs (106) des Blatts (102) oder/und einer Art des Schadens (105) am Blatt (102) unter Verwendung eines Künstliche-Intelligenz-Modells (KI-Modells);

Ermitteln eines oder mehrerer Faktoren für das von dem Schaden betroffene Blatt (102) bei der Windenergieanlage (101), wobei der eine oder die mehreren Faktoren eine mit jedem der Blätter (102) bei der Windenergieanlage (101) verknüpfte Lastverteilung, asymmetrische Lastverteilungen zwischen jedem der Blätter (102) bei der Windenergieanlage (101), einen mit der Windenergieanlage (101) verknüpften Geräuschemissionswert und eine Notwendigkeit einer Steueränderung bei der Windenergieanlage (101) umfassen; und

Bestimmen einer Art einer Wartungsaktivität oder/und einer Zeitdauer für das Durchführen der Wartungsaktivität für den Schadensbereich (106) des Blatts (102) bei der Windenergieanlage (101) auf der Grundlage des finanziellen Verlusts (108) und des einen oder der mehreren Faktoren.

6. Rechensystem (104) zum Schätzen der Energieproduktion (107) einer Windenergieanlage (101), wobei die Windenergieanlage (101) im Einsatz mehrere Blätter (102) umfasst, wobei das Rechensystem (104) Folgendes umfasst:

mindestens einen Prozessor (104A); und

einen Arbeitsspeicher (104B), der mit dem mindestens einen Prozessor (104A) kommunikationsverbunden ist, wobei in dem Arbeitsspeicher (104B) Anweisungen für den mindestens einen Prozessor (104A) gespeichert sind, deren Ausführung den mindestens einen Prozessor (104A) dazu veranlasst:

ein oder mehrere Infrarotbilder (103) von jedem Blatt (102) der mehreren Blätter (102) der Windenergieanlage (101) abzurufen;

mithilfe des einen oder der mehreren Infrarotbilder (103) eine oder mehrere Querschnittsregionen (302) jedes der Blätter (102) auf der Grundlage einer Grenzregion (301) zu bestimmen, wobei die Grenzregion (301) einen Übergang von einer ersten Region mit laminarer Luftströmung zu einer zweiten Region mit turbulenter Luftströmung anzeigt;

für jede der einen oder der mehreren Querschnittsregionen (302) auf der Grundlage einer oder mehrerer auf Panelverfahren basierender Techniken und der Grenzregion (301) mehrere polare Werte zu ermitteln, die ein aerodynamisches Profil anzeigen; und

auf der Grundlage einer oder mehrerer auf Blatt-(102)-Element-Impulsen (BEM) basierender Techniken unter Verwendung der mehreren polaren Werte die Energieproduktion (107) der Windenergieanlage (101) zu schätzen.

7. Rechensystem (104) nach Anspruch 6, wobei der mindestens eine Prozessor (104A) so konfiguriert ist, dass er die eine oder die mehreren Querschnittsregionen (302) bestimmt, Folgendes umfasst:

Ermitteln der Grenzregion (301) des Blatts (102) in dem einen oder den mehreren Infrarotbildern (103) unter Verwendung einer oder mehrerer Bildverarbeitungstechniken; und

Unterteilen des Blatts (102) in dem einen oder den mehreren Infrarotbildern (103) auf der Grundlage der Grenzregion (301) und mit dem einen oder den mehreren Infrarotbildern (103) verknüpfter Pixelwerte in die eine oder die mehreren Querschnittsregionen (302).

8. Rechensystem (104) nach Anspruch 6, wobei der mindestens eine Prozessor (104A) so konfiguriert ist, dass er die mehreren polaren Werte ermittelt, Folgendes umfasst:

Bereitstellen jeder der einen oder der mehreren Querschnittsregionen (302), der Grenzregion (301) und einer oder mehrerer Schnittkoordinaten als Eingabe für die eine oder die mehreren auf Panelverfahren basierenden Techniken; und

Ermitteln der mehreren polaren Werte für jede der einen oder der mehreren Querschnittsregionen (302) auf der Grundlage einer Ausgabe der einen oder der mehreren auf Panelverfahren basierenden Techniken.

9. Rechensystem (104) nach Anspruch 6, wobei der mindestens eine Prozessor (104A) ferner so konfiguriert ist, dass er die Energieproduktion (107) schätzt, Folgendes umfasst:

Bereitstellen der mehreren polaren Werte, die mit jeder der einen oder den mehreren Querschnittsregionen (302) verknüpft sind, von Geometriedaten eines Blatts (102), von Betriebsdaten einer Windenergieanlage (101) als Eingabe für die eine oder die mehreren auf BEM basierenden Techniken; und

Schätzen der Energieproduktion (107) der Windenergieanlage (101) auf der Grundlage einer Ausgabe der einen oder der mehreren auf BEM basierenden Techniken.

10. Rechensystem (104) nach Anspruch 6, wobei der mindestens eine Prozessor (104A) so konfiguriert ist, dass er:

eine Abweichung zwischen der für die Windenergieanlage (101) geschätzten Energieproduktion (107) und einem vorgegebenen Schwellenwert ermittelt;

auf der Grundlage der Abweichung eine Verringerung der Energieproduktion (107) der Windenergieanlage (101) berechnet;

einen finanziellen Verlust (108) aus der Windenergieanlage (101) aufgrund der Verringerung der Energieproduktion (107) ermittelt;

unter Verwendung eines Künstliche-Intelligenz-Modells (KI-Modells) einen Schadensbereich (106) des Blatts (102) oder/und eine Art des Schadens (105) am Blatt (102) ermittelt;

einen oder mehrere Faktoren für das von dem Schaden betroffene Blatt (102) bei der Windenergieanlage (101) ermittelt, wobei der eine oder die mehreren Faktoren eine mit jedem der Blätter (102) bei der Windenergieanlage (101) verknüpfte Lastverteilung, asymmetrische Lastverteilungen zwischen jedem der Blätter (102) bei der Windenergieanlage (101), einen mit der Windenergieanlage (101) verknüpften Geräuschemissionswert und eine Notwendigkeit einer Steueränderung bei der Windenergieanlage (101) umfassen; und

auf der Grundlage des finanziellen Verlusts (108) und des einen oder der mehreren Faktoren eine Art einer Wartungsaktivität oder/und eine Zeitdauer für das Durchführen der Wartungsaktivität für den Schadensbereich (106) des Blatts (102) bei der Windenergieanlage (101) bestimmt.

## Revendications

1. Procédé servant à estimer la production d'énergie (107) en provenance d'une éolienne (101), dans lequel l'éolienne (101) comporte une pluralité de pales (102) en cours d'utilisation, le procédé comportant les étapes consistant à :

obtenir, par un système informatique (104), une ou plusieurs images infrarouges (103) de chaque pale (102) parmi la pluralité de pales (102) de l'éolienne (101) ;

identifier, par le système informatique (104), une ou plusieurs régions de section transversale (302) de chacune des pales (102) en utilisant lesdites une ou plusieurs images infrarouges (103) sur la base d'une région limite (301), dans lequel la région limite (301) indique une transition pour passer d'une première région à écoulement d'air laminaire à une deuxième région à écoulement d'air turbulent ;

déterminer, par le système informatique (104), une pluralité de valeurs polaires qui indiquent un profil aérodynamique pour chacune desdites une ou plusieurs régions de section transversale (302) sur la base d'une ou de plusieurs techniques basées sur un procédé de panneau et de la région limite (301) ; et

estimer, par le système informatique (104), la production d'énergie (107) pour l'éolienne (101) sur la base d'une ou de plusieurs techniques basées sur le moment d'élément de pale (BEM) (102) en utilisant la pluralité de valeurs polaires.

2. Procédé selon la revendication 1, dans lequel l'étape consistant à identifier une ou plusieurs régions de section transversale (302) comporte les étapes consistant à :

déterminer la région limite (301) de la pale (102) dans lesdites une ou plusieurs images infrarouges (103) en utilisant une ou plusieurs techniques de traitement d'image ; et

séparer la pale (102) dans lesdites une ou plusieurs images infrarouges (103) en lesdites une ou plusieurs régions de section transversale (302) sur la base de la région limite (301) et des valeurs de pixels associées auxdites une ou plusieurs images infrarouges (103).

3. Procédé selon la revendication 1, dans lequel l'étape consistant à déterminer la pluralité de valeurs polaires comporte les étapes consistant à :

fournir chacune parmi lesdites une ou plusieurs régions de section transversale (302), la région limite (301) et une ou plusieurs coordonnées de section en tant qu'entrée dans lesdites une ou plusieurs techniques basées sur le procédé de panneau ; et

déterminer la pluralité de valeurs polaires pour chacune desdites une ou plusieurs régions de section transversale (302) sur la base d'une sortie desdites une ou plusieurs techniques basées sur le procédé de panneau.

4. Procédé selon la revendication 1, dans lequel l'étape consistant à estimer la production d'énergie (107) comporte les étapes consistant à :

fournir la pluralité de valeurs polaires associées à chacune desdites une ou plusieurs régions de section transversale (302), des données géométriques de pale (102), des données opérationnelles d'éolienne (101) en tant qu'entrée dans lesdites une ou plusieurs techniques basées sur le BEM ; et

estimer la production d'énergie (107) pour l'éolienne (101) sur la base d'une sortie desdites une ou plusieurs techniques basées sur le BEM.

5. Procédé selon la revendication 1, comportant par ailleurs les étapes consistant à :

déterminer un écart entre la production d'énergie (107) estimée pour l'éolienne (101) et une valeur seuil prédéfinie ;

calculer une réduction de la production d'énergie (107) de l'éolienne (101) sur la base de l'écart ;

déterminer une perte financière (108) de l'éolienne (101) en raison de la réduction de la production d'énergie (107) ;

déterminer au moins l'un parmi une zone endommagée (106) de la pale (102), un type de dommage (105) sur la pale (102) en utilisant un modèle d'intelligence artificielle (IA) ;

déterminer un ou plusieurs facteurs de la pale (102) dans l'éolienne (101) affectée par le dommage, dans lequel lesdits un ou plusieurs facteurs comportent une répartition de charge associée à chacune des pales (102) dans l'éolienne (101), des répartitions de charge asymétriques entre chacune des pales (102) dans l'éolienne (101), une valeur d'émission de bruit associée à l'éolienne (101) et la nécessité d'un changement de commande dans l'éolienne (101) ; et

identifier au moins l'un parmi un type d'activité de maintenance et une durée d'exécution de l'activité de maintenance pour la zone endommagée (106) de la pale (102) dans l'éolienne (101) sur la base de la perte financière (108) et desdits un ou plusieurs facteurs.

6. Système informatique (104) servant à estimer la production d'énergie (107) en provenance d'une éolienne (101), dans lequel l'éolienne (101) comporte une pluralité de pales (102) en cours d'utilisation, le système informatique (104) comporte :

au moins un processeur (104A) ; et

une mémoire (104B) couplée par voie de communication à ledit au moins un processeur (104A), dans lequel la mémoire (104B) stocke des instructions pour ledit au moins un processeur (104A), dont une exécution amène ledit au moins un processeur (104A) à :

obtenir une ou plusieurs images infrarouges (103) de chaque pale (102) parmi la pluralité de pales (102) de l'éolienne (101) ;

identifier une ou plusieurs régions de section transversale (302) de chacune des pales (102) en utilisant lesdites une ou plusieurs images infrarouges (103) sur la base d'une région limite (301), dans lequel la région limite (301) indique une transition pour passer d'une première région à écoulement d'air laminaire à une deuxième région à écoulement d'air turbulent ;

déterminer une pluralité de valeurs polaires qui indiquent un profil aérodynamique pour chacune desdites une ou plusieurs régions de section transversale (302) sur la base d'une ou de plusieurs techniques basées sur un procédé de panneau et de la région limite (301) ; et

estimer la production d'énergie (107) pour l'éolienne (101) sur la base d'une ou de plusieurs techniques basées sur le moment d'élément de pale (BEM) (102) en utilisant la pluralité de valeurs polaires.

7. Système informatique (104) selon la revendication 6, dans lequel ledit au moins un processeur (104A) est configuré pour identifier lesdites une ou plusieurs régions de section transversale (302) comporte :

déterminer la région limite (301) de la pale (102) dans lesdites une ou plusieurs images infrarouges (103) en utilisant une ou plusieurs techniques de traitement d'image ; et

séparer la pale (102) dans lesdites une ou plusieurs images infrarouges (103) en lesdites une ou plusieurs régions de section transversale (302) sur la base de la région limite (301) et des valeurs de pixels associées auxdites une ou plusieurs images infrarouges (103).

8. Système informatique (104) selon la revendication 6, dans lequel ledit au moins un processeur (104A) est configuré pour déterminer la pluralité de valeurs polaires comporte :

fournir chacune parmi lesdites une ou plusieurs régions de section transversale (302), la région limite (301) et une ou plusieurs coordonnées de section en tant qu'entrée dans lesdites une ou plusieurs techniques basées sur le procédé de panneau ; et

déterminer la pluralité de valeurs polaires pour chacune desdites une ou plusieurs régions de section transversale (302) sur la base d'une sortie desdites une ou plusieurs techniques basées sur le procédé de panneau.

9. Système informatique (104) selon la revendication 6, dans lequel ledit au moins un processeur (104A) est par ailleurs configuré pour estimer la production d'énergie (107) comporte :

fournir la pluralité de valeurs polaires associées à chacune desdites une ou plusieurs régions de section transversale (302), des données géométriques de pale (102), des données opérationnelles d'éolienne (101) en tant qu'entrée dans lesdites une ou plusieurs techniques basées sur le BEM ; et

estimer la production d'énergie (107) pour l'éolienne (101) sur la base d'une sortie desdites une ou plusieurs techniques basées sur le BEM.

10. Système informatique (104) selon la revendication 6, dans lequel ledit au moins un processeur (104A) est configuré pour :

déterminer un écart entre la production d'énergie (107) estimée pour l'éolienne (101) et une valeur seuil prédéfinie ;

calculer une réduction de la production d'énergie (107) de l'éolienne (101) sur la base de l'écart ;

déterminer une perte financière (108) de l'éolienne (101) en raison de la réduction de la production d'énergie (107) ;

déterminer au moins l'un parmi une zone endommagée (106) de la pale (102), un type de dommage (105) sur la pale (102) en utilisant un modèle d'intelligence artificielle (IA) ;

déterminer un ou plusieurs facteurs de la pale (102) dans l'éolienne (101) affectée par le dommage, dans lequel lesdits un ou plusieurs facteurs comportent une répartition de charge associée à chacune des pales (102) dans l'éolienne (101), des répartitions de charge asymétriques entre chacune des pales (102) dans l'éolienne (101), une valeur d'émission de bruit associée à l'éolienne (101) et la nécessité d'un changement de commande dans l'éolienne (101) ; et

identifier au moins l'un parmi un type d'activité de maintenance et une durée d'exécution de l'activité de maintenance pour la zone endommagée (106) de la pale (102) dans l'éolienne (101) sur la base de la perte financière (108) et desdits un ou plusieurs facteurs.

FIGURE 1

200

OBTAIN ONE OR MORE INFRARED IMAGES OF EACH BLADE OF THE WIND TURBINE — 201

IDENTIFY ONE OR MORE CROSS-SECTIONAL REGIONS OF EACH OF THE BLADE — 202

DETERMINE A PLURALITY OF POLAR VALUES — 203

ESTIMATE THE ENERGY PRODUCTION FOR THE WIND TURBINE — 204

FIGURE 2

(i)

(ii)

(iii)

FIGURE 3A

(i)

(ii)

(iii)

**FIGURE 3B**

FIGURE 3C

EP 4 155 539 B1

**FIGURE 3D**

EP 4 155 539 B1

(ii)

FIGURE 3D

106

Type of the damage (105) = erosion of the protection layer of the leading edge

(i)

**FIGURE 3E**

(ii)

**FIGURE 3E**

EP 4 155 539 B1

106

Type of the damage (105) = Previous maintenance activity

(iii)

**FIGURE 3E**

EP 4 155 539 B1

FIGURE 4

27

**EP 4 155 539 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020156629 A1